Europäisches Patentamt

European Patent Office

Office européen des brevets

(19)

(11) EP 1 219 487 A2

(12) **EUROPEAN PATENT APPLICATION**

(43) Date of publication:
03.07.2002 Bulletin 2002/27

(51) Int Cl.⁷: **B60K 6/04**, F02N 11/08

(21) Application number: 01130420.1

(22) Date of filing: 20.12.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 27.12.2000 JP 2000397248

(71) Applicant: AISIN AW CO., LTD.
Anjo-shi, Aichi-ken 444-1192 (JP)

(72) Inventors:
• **Yamaguchi, Kozo**
Anjo-shi, Aichi-ken, 444-1192 (JP)

• **Hisada, Hideki**
Anjo-shi, Aichi-ken, 444-1192 (JP)
• **Aoki, Kazuo**
Anjo-shi, Aichi-ken, 444-1192 (JP)

(74) Representative:
**Leson, Thomas Johannes Alois, Dipl.-Ing.**
Tiedtke-Bühling-Kinne & Partner GbR,
TBK-Patent,
Bavariaring 4
80336 München (DE)

(54) **Engine shut-down control in a hybrid vehicle**

(57) A hybrid vehicle has an engine, a generator motor, a drive motor, a drive wheel mechanically connected to the engine, the generator motor and the drive motor, stop means for stopping revolution of the engine, and generator motor control processing means for, when the hybrid vehicle is to be started, covering a shortfall of the drive force produced by the drive motor with the drive force produced by the generator motor by using a reaction force provided by the stop means. The generator motor control processing means causes a generation of a generator motor torque in dependence on a difference between a changing rate of a requested torque and a limiting value of a changing rate of a drive motor torque pre-set for the drive motor. Thus, the changing rate of the vehicle torque and the changing rate of the requested torque can be made equal, thereby preventing an uncomfortable sensation from being caused to a driver when a hybrid vehicle is to be started.

FIG. 1

EP 1 219 487 A2

**Description**

BACKGROUND OF THE INVENTION

1. Field of the Invention

The invention relates to a hybrid vehicle.

2. Description of the Related Art

A conventional split-type hybrid vehicle has a planetary gear unit that includes a sun gear, a ring gear and a carrier. The carrier is connected to an engine. The ring gear is connected to a drive wheel. The sun gear is connected to a generator motor. Rotation outputted from the ring gear and a drive motor is transferred to the drive wheel so as to produce drive force.

In this hybrid vehicle, a reaction of the generator motor torque, that is, the torque of the generator motor, is received by a one-way clutch disposed between an output shaft of the engine and a casing, so as to cover a shortfall of the drive force produced by the drive motor with a drive force produced by the generator motor (see Japanese Patent Application Laid-Open NO. HEI 8-295140).

However, in the conventional hybrid vehicle, the maximum changing rate of the generator motor torque and the maximum changing rate of the drive motor torque, that is, the torque of the drive motor, vary depending on the characteristics of the generator motor and the drive motor. Furthermore, a drive motor outputtable torque is set for the drive motor in order to limit the drive motor torque. Therefore, if a driving person depresses the accelerator pedal to start the hybrid vehicle, it is difficult to equalize the changing rate of the vehicle torque obtained by adding the drive motor torque to the generator motor torque with the changing rate of a requested torque needed to start the hybrid vehicle, so that the driver will likely feel an uncomfortable sensation.

SUMMARY OF THE INVENTION

Accordingly, it is an object of the invention to provide a hybrid vehicle that does not make a driver feel an uncomfortable sensation when the vehicle is to be started.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a function block diagram of a hybrid vehicle in accordance with an embodiment of the invention;

FIG. 2 is a conceptual diagram of a hybrid vehicle in accordance with the embodiment of the invention;

FIG. 3 is a diagram illustrating operation of a planetary gear unit in the embodiment of the invention;

FIG. 4 is a block diagram illustrating a control unit of the hybrid vehicle in accordance with the embodiment of the invention;

FIG. 5 is a flowchart illustrating an operation of the hybrid vehicle in accordance with the embodiment of the invention;

FIG. 6 is a diagram indicating a first vehicle drive force map in the embodiment of the invention;

FIG. 7 is a diagram indicating a second vehicle drive force map in the embodiment of the invention;

FIG. 8 is a diagram indicating a target engine operation state map in the embodiment of the invention;

FIG. 9 is a first time chart illustrating a technique of a generator motor torque rise tempering process in the embodiment of the invention;

FIG. 10 is a second time chart illustrating the technique of the generator motor torque rise tempering process in the embodiment of the invention;

FIG. 11 is a time chart indicating a first drive pattern in accordance with the embodiment of the invention;

FIG. 12 is a time chart indicating a second drive pattern in accordance with the embodiment of the invention;

FIG. 13 is a time chart indicating a third drive pattern in accordance with the embodiment of the invention;

FIG. 14 is a time chart indicating a fourth drive pattern in accordance with the embodiment of the invention;

FIG. 15 is a time chart indicating a fifth drive pattern in accordance with the embodiment of the invention;

FIG. 16 is a diagram indicating a state in which the generator motor torque rise tempering process is performed during the first drive pattern in accordance with the embodiment of the invention; and

FIG. 17 is a diagram indicating a state in which the generator motor torque rise tempering process is performed during the fourth drive pattern in accordance with the embodiment of the invention.

DETAILED DESCRIPTION OF PREFERRED EMBODIMENTS

A preferred embodiment of the invention will be described hereinafter with reference to the accompanying drawings.

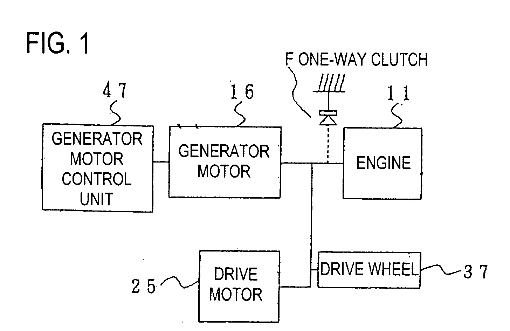

FIG. 1 is a function block diagram of a hybrid vehicle in accordance with an embodiment of the invention.

In FIG. 1, reference numeral 11 represents an engine; 16 represents a generator motor that receives at least a portion of an engine torque to generate an electric power and to control the engine revolution speed; 25 represents a drive motor; 37 represents a drive wheel mechanically connected to the engine 11, the generator motor 16 and to the drive motor 25; F represents a one-way clutch as a stop means for stopping revolution of the engine 11; 47 represents a generator motor control unit as a generator motor control processing means for, when the hybrid vehicle is to be started, covering a shortfall of the drive force produced by the drive motor with the drive force produced by the generator motor by using a reaction force provided by the one-way clutch F. The generator motor control unit 47 causes a generator motor torque to be produced corresponding to a difference between the changing rate of a requested torque and a limiting value of the changing rate of drive motor torque pre-set for the drive motor 25.

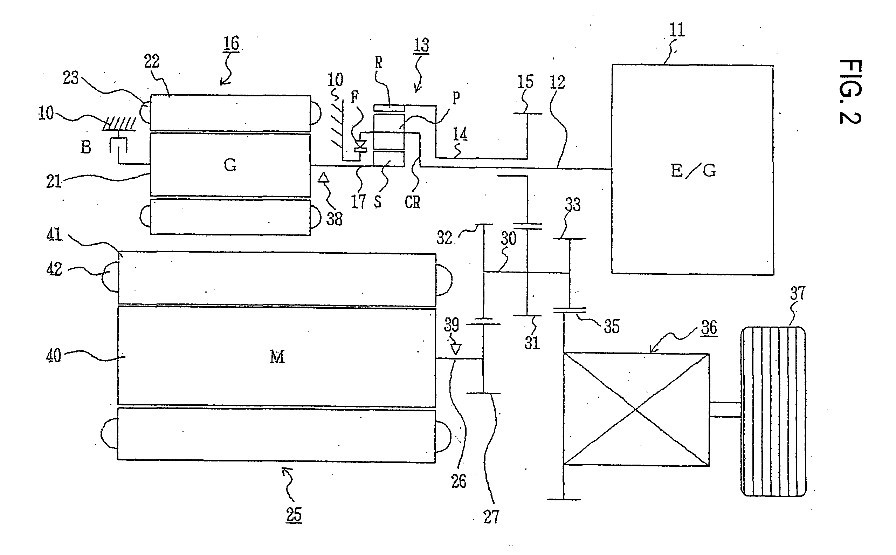

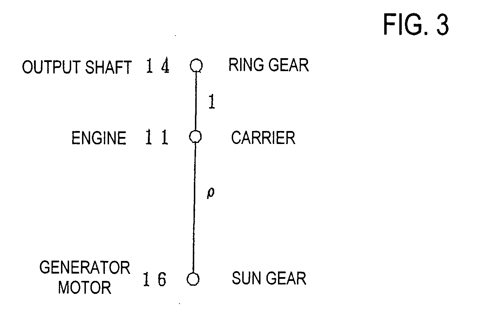

FIG. 2 is a conceptual diagram of a hybrid vehicle in accordance with the embodiment of the invention. FIG. 3 is a diagram illustrating operation of a planetary gear unit in the embodiment of the invention.

In the drawings; reference numeral 11 represents the engine (E/G) disposed on a first axis; 12 represents an output shaft disposed on the first axis for outputting the rotation produced by driving the engine 11; 13 represents a planetary gear unit as a differential gear device disposed on the first axis for changing the speed of rotation inputted thereto via the output shaft 12; 14 represents an output shaft disposed on the first axis for outputting rotation after the speed of rotation has been changed by the planetary gear unit 13; 15 represents a first counter drive gear as an output gear fixed to the output shaft 14; and 16 represents the generator motor (G) as a first electric motor that is disposed on the first axis, and that is connected to the planetary gear unit 13 via a transfer shaft 17 disposed on the first axis as well, and that is mechanically connected to the engine 11. The generator motor 16 receives at least a portion of the engine torque TE, that is, the torque of the engine 11, to generate electric power, and controls the engine revolution speed.

The output shaft 14 has a sleeve-like shape, and is disposed around the output shaft 12. The first counter drive gear 15 is disposed at an engine 11-side of the planetary gear unit 13.

The planetary gear unit 13 is made up of a sun gear S as a first gear element, pinions P meshed with the sun gear S, a ring gear R as a second gear element meshed with the pinions P, and a carrier CR as a third gear element that rotatably supports the pinions P. The sun gear S is connected to the generator motor 16 via the transfer shaft 17. The ring gear R is connected to a drive wheel 37 via the output shaft 14 and a certain gear train. The carrier CR is connected to the engine 11 via the output shaft 12. The drive wheel 37 is mechanically connected to the engine 11, the generator motor 16 and the drive motor 25.

The one-way clutch F, that is, a stop means, is disposed between the carrier CR and a casing 10 of a drive apparatus. The one-way clutch F becomes free when forward rotation is transferred from the engine 11 to the carrier CR. When reverse rotation is transferred from the generator motor 16 or the drive motor 25 to the carrier CR, the one-way clutch F is locked to stop revolution of the engine 11, so that reverse rotation is not transferred to the engine 11. Therefore, when the generator motor 16 is driven while the driving of the engine 11 is kept stopped, the one-way clutch F provides a reaction force with respect to the torque transferred from the generator motor 16. As a substitute for the one-way clutch F, a brake (not shown), that is, a stop means, may be disposed between the carrier CR and the casing 10.

The generator motor 16 is made up of a rotor 21 fixed to the transfer shaft 17 so as to be freely rotatable, a stator 22 disposed around the rotor 21, and a coil 23 formed on the stator 22. The generator motor 16 generates electric power from rotation transferred thereto via the transfer shaft 17. The coil 23 is connected to a battery (not shown), and supplies DC current to the battery. A brake B is disposed between the rotor 21 and the casing 10. By engaging the brake B, the rotor 21 can be fixed to stop rotation of the generator motor 16.

Further in FIGS. 1 and 2, reference numeral 25 represents a drive motor (M) as a second electric motor that is disposed on a second axis parallel to the first axis, and that is mechanically interconnected with the generator motor 16; 26 represents an output shaft which is disposed on the second axis and to which rotation of the drive motor 25 is outputted; and 27 represents a second counter drive gear as an output gear fixed to the output shaft 26. The drive motor 25 is made up of a rotor 40 fixed to the output shaft 26 so that the rotor 40 is rotatable, a stator 41 disposed around the rotor 40, and a coil 42 formed on the stator 41.

The drive motor 25 produces drive motor torque TM from current supplied to the coil 42. To that end, the coil 42 is connected to the battery, and is supplied with AC current converted from DC current from the battery. The generator motor 16, the drive motor 25 and the drive wheel 37 are mechanically connected.

In order to turn the drive wheel 37 in the same rotating direction as the engine 11, a counter shaft 30 is disposed on a third axis parallel to the first and second axes. Fixed to the counter shaft 30 are a first counter driven gear 31 and a second counter driven gear 32 that has more teeth than the first counter driven gear 31. The first counter driven gear 31 and the first counter drive gear 15 are meshed. The second counter driven gear 32 and the second counter drive gear 27 are meshed. Thus, rotation of the first counter drive gear 15 is transferred to the first counter driven gear 31 while rotation is reversed. Rotation of the second counter drive gear 27 is transferred to the second counter driven gear 32 while rotation is reversed.

Also fixed to the counter shaft 30 is a differential pinion gear 33 that has fewer teeth than the first counter driven gear 31.

A differential apparatus 36 is disposed on a fourth axis parallel to the first to third axes. A differential ring gear 35 of the differential apparatus 36 is meshed with the differential pinion gear 33. Therefore, rotation transferred to the differential ring gear 35 is distributed by the differential apparatus 36, and is transferred to the drive wheel 37. In FIG. 2, reference numeral 38 represents a generator motor rotation speed sensor for detecting a generator motor rotation speed NG that indicates the rotation speed of the generator motor 16; and 39 represents a drive motor rotation speed sensor for detecting a drive motor rotation speed NM that indicates the rotation speed of the drive motor 25.

Thus, rotation produced by the engine 11 can be transferred to the first counter driven gear 31. Furthermore, rotation produced by the drive motor 25 can be transferred to the second counter driven gear 32. Therefore, by driving the engine 11 and the drive motor 25, the hybrid vehicle can be run.

In the planetary gear unit 13, the carrier CR and the sun gear S are connected to the engine 11 and the generator motor 16, respectively, and the ring gear R is connected to the drive wheel 37 via the output shaft 14 as shown in FIG. 3. Therefore, the rotation speed of the ring gear R equals the rotation speed of the output shaft 14, that is, the output rotation speed NO. Furthermore, the rotation speed of the carrier CR equals the revolution speed of the engine 11, that is, the engine revolution speed NE, and the rotation speed of the sun gear S equals the rotation speed of the generator motor 16, that is, the generator motor rotation speed NG. Since the number of teeth of the ring gear R is $\rho$ times the number of teeth of the sun gear S (in this embodiment, twice the number of teeth of the sun gear S), a relationship holds as follows:

$$(\rho + 1) \cdot NE = 1 \cdot NG + \rho \cdot NO$$

The engine torque TE, the output torque TO and the generator motor torque TG have the following relationship:

$$TE:TO:TG = (\rho + 1):\rho:1$$

Thus, the engine torque TE, the output torque TO and the generator motor torque TG are affected by reaction forces from one another.

Next described will be a control apparatus of the hybrid vehicle constructed as described above.

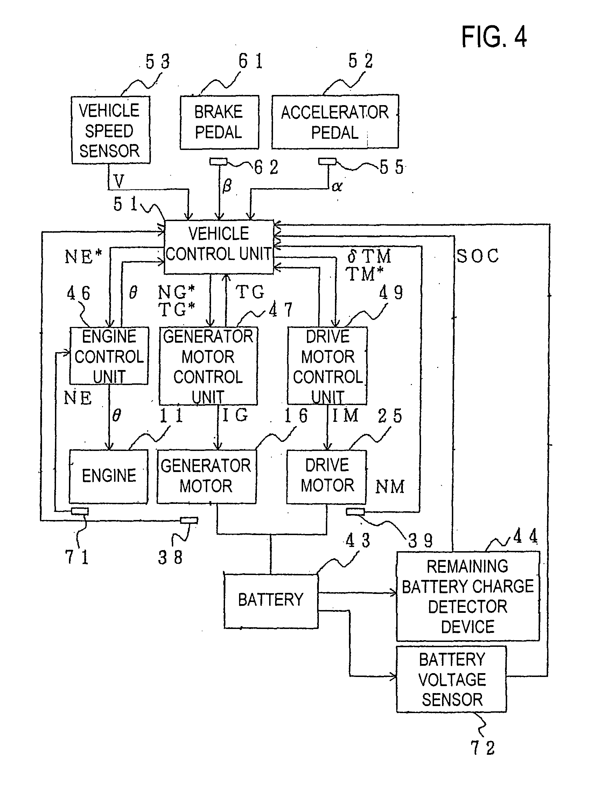

FIG. 4 is a block diagram illustrating a control unit of the hybrid vehicle in accordance with the embodiment of the invention.

In FIG. 4, reference numeral 11 represents the engine; 16 represents the generator motor; 25 represents the drive motor; and 43 represents the battery.

Reference numeral 46 represents an engine control unit as an engine control processing means for controlling the engine 11. The engine control unit 46 reads the engine revolution speed NE detected by an engine revolution speed sensor 71, and sends to the engine 11 an instruction signal such as a throttle opening $\theta$ or the like. Reference numeral 47 represents the generator motor control unit as a generator motor control processing means for controlling the generator motor 16. The generator motor control unit 47 sends a current instruction value IG to the generator motor 16. Reference numeral 49 represents a drive motor control unit as a drive motor control processing means for controlling the drive motor 25. The drive motor control unit 49 sends a current instruction value IM to the drive motor 25.

Reference numeral 51 represents a vehicle control unit made up of a CPU, a recording device, etc. (which are not shown) for performing overall control of the hybrid vehicle; 44 represents a remaining battery charge detector device for detecting the remaining amount of battery charge SOC as a state of the battery 43; 52 represents an accelerator pedal; 53 represents a vehicle speed sensor for detecting the vehicle speed V; 55 represents an accelerator switch as an accelerator operation amount detecting means for detecting the amount of depression of the accelerator pedal 52, that is, the accelerator operation amount $\alpha$; 61 represents a brake pedal; 62 represents a brake switch as a brake operation detecting means for detecting the amount of depression of the brake pedal 61; 38 represents a generator motor rotation speed sensor for detecting the generator motor rotation speed NG; 39 represents a drive motor rotation speed sensor for detecting the drive motor rotation speed NM; and 72 represents a battery voltage sensor for detecting the battery voltage VB as a state of the battery 43. The remaining battery charge detector device 44 and the battery voltage sensor 72 form a battery state detecting means.

The vehicle control unit 51 sets the driving and stopping of the engine 11 by sending control signals to the engine control unit 46, and sets a target value of the engine revolution speed NE, that is, a target engine revolution speed NE*, in the engine control unit 46, and sets a target value of the generator motor rotation speed NG, that is, a target generator motor rotation speed NG*, and a target value of the generator motor torque TG, that is, a target generator motor torque TG*, in the generator motor control unit 47, and sets a target value of the generator motor torque TG, that is, a target generator motor torque TG*, and a drive motor torque correction value $\delta$TM in the drive motor control unit 49.

Next described will be an operation of the hybrid vehicle constructed as described above.

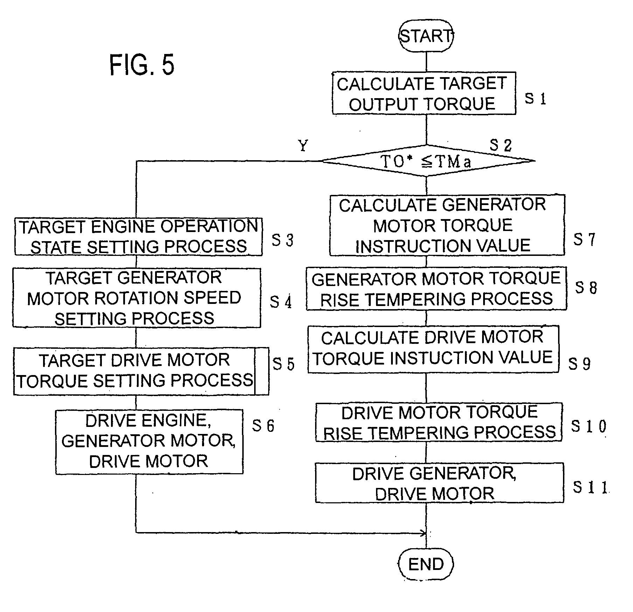

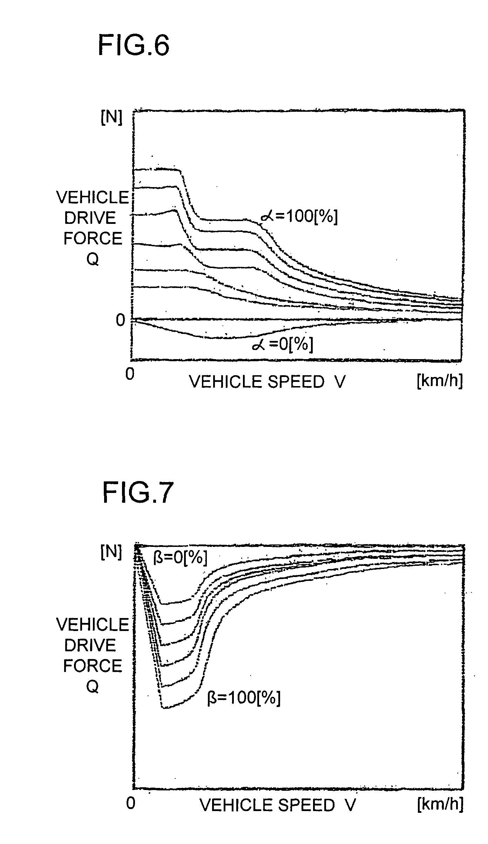

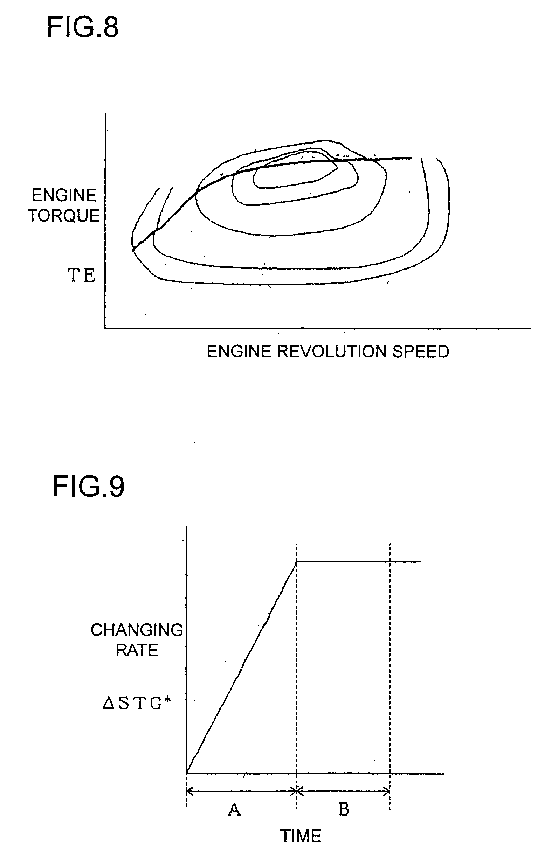

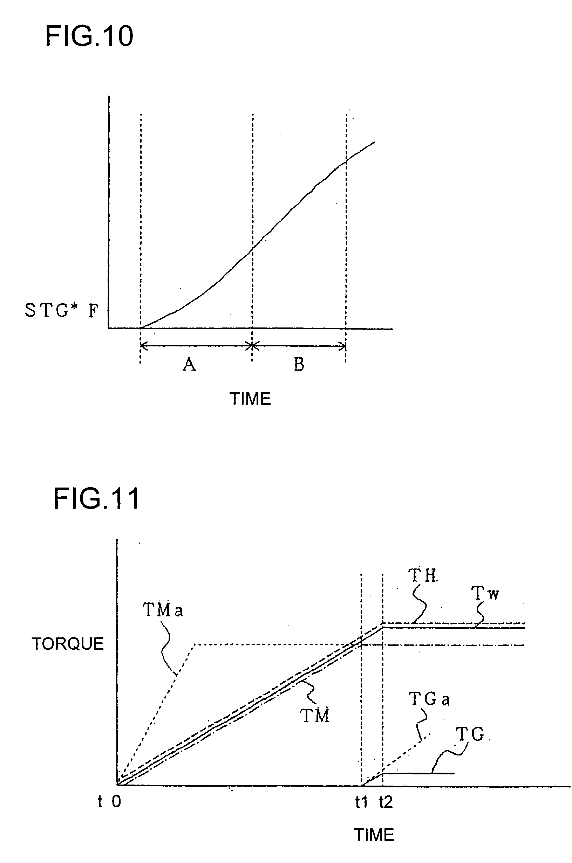

FIG. 5 is a flowchart illustrating an operation of the hybrid vehicle in accordance with the embodiment of the invention. FIG. 6 is a diagram indicating a first vehicle drive force map in the embodiment of the invention. FIG. 7 is a diagram indicating a second vehicle drive force map in the embodiment of the invention. FIG. 8 is a diagram indicating a target engine operation state map in the embodiment of the invention. FIG. 9 is a first time chart illustrating a technique of a generator motor torque rise tempering process in the embodiment of the invention. FIG. 10 is a second time chart illustrating the technique of the generator motor torque rise tempering process in the embodiment of the invention. In FIGS. 6 and 7, the abscissa axis represents the vehicle speed V, and the ordinate axis represents the vehicle drive force Q. In FIG. 8, the abscissa axis represents the engine revolution speed NE, and the ordinate axis represents the engine torque TE.

First, a target output torque calculation processing means (not shown) of the vehicle control unit 51 (FIG. 4) performs a target output torque calculating process as follows. That is, the means reads the vehicle speed V detected by the vehicle speed sensor 53, the acceleration operation amount $\alpha$ detected by the accelerator switch 55, and the amount of depression $\beta$ of the brake pedal 61 detected by the brake switch 62. The means calculates a vehicle drive force Q needed to run the hybrid vehicle that is predetermined in correspondence to the vehicle speed V, the acceleration operation amount $\alpha$ and the amount of depression $\beta$, with reference to the first vehicle drive force map indicated in FIG. 6 if the accelerator pedal 52 is depressed, and with reference to the second vehicle drive force map indicated in FIG. 7 if the brake pedal 61 is depressed. By multiplying the calculated vehicle drive force Q by the radius r of the drive wheel 37 (FIG. 2), the means determines a torque needed to run the hybrid vehicle, that is, a requested torque Tw. Furthermore, the means calculates a target output torque TO* based on the requested torque Tw. The calculated target output torque TO* is calculated based on the vehicle drive force Q, and the gear ratio of a torque transfer system from the output shaft 14 to the drive wheel 37.

Next, the vehicle control unit 51 compares the target output torque TO* and a drive motor outputtable torque TMa that indicates a maximum changing rate pre-set for limiting the drive motor torque TM, that is, a limiting value of the changing rate. If the target output torque TO* is less than or equal to drive motor outputtable torque TMa, the vehicle control unit 51 determines that the hybrid vehicle can be started merely by driving the drive motor 25, and starts the hybrid vehicle in a first start mode. If the target output torque TO* is greater than the drive motor outputtable torque TMa, the vehicle control unit 51 determines that the hybrid vehicle cannot be started merely by driving the drive motor 25, and stats the hybrid vehicle in a second start mode.

During the first vehicle start mode, a target engine operation state setting processing means (not shown) of the vehicle control unit 51 performs a target engine operation state setting process. That is, by referring to the target engine operation state map shown in FIG. 8, the means sets, as a target engine operation state, an engine operation point (indicated by a bold line in FIG. 8) of a good efficiency among various engine operation points. The means then calculates the engine revolution speed NE in the set target engine operation state as a target engine revolution speed NE*, and sends it to the engine control unit 46.

A target generator motor rotation speed setting processing means (not shown) of the vehicle control unit 51 performs a target generator motor rotation speed setting process to calculate a target generator motor rotation speed NG*. To that end, the target generator motor rotation speed setting processing means reads the vehicle speed V, and calculates an output rotation speed NO from the vehicle speed V and the gear ratio GO of a transfer line from the planetary gear unit 13 to the drive wheel 37, as in the following equation.

$$NO = V \cdot GO$$

Next, the target generator motor rotation speed setting processing means calculates a target generator motor rotation speed NG* based on the target engine revolution speed NE* and the output rotation speed NO, as in the equation below. The means then sets the target generator motor rotation speed NG*, and sends it to the generator motor control unit 47.

$$NG^* = NO - (NO - NE^*) \cdot (1 + \rho)/\rho$$

As mentioned above, the engine torque TE, the output torque TO and the generator motor torque TG receive reaction forces from one another. Therefore, as the generator motor 16 is driven , the generator motor torque TG is converted into a ring gear torque TR, and is outputted from the ring gear R. Hence, if during the driving of the generator motor 16 at the target generator motor rotation speed NG*, the ring gear torque TR fluctuates and the fluctuating ring gear torque TR is transferred to the drive wheel 37, the running feel of the hybrid vehicle deteriorates. Therefore, the drive motor torque TM is corrected by an amount corresponding to the fluctuation of the ring gear torque TR, and the drive motor torque correction value $\delta$TM is sent to the drive motor control unit 49.

To that end, the generator motor control unit 47 reads the generator motor rotation speed NG via the vehicle control unit 51, and calculates a generator motor torque TG corresponding to the generator motor rotation speed NG and the battery voltage VB by referring to a generator motor torque map (not shown). The generator motor control unit 47 then sends the calculated generator motor torque TG to the vehicle control unit 51.

After that, a drive motor torque correction value calculation processing means (not shown) of the vehicle control unit 51 performs a drive motor torque correction value calculating process. That is, the means calculates a drive motor torque correction value δTM based on the generator motor torque TG received from the generator motor control unit 47, the ratio of the number of teeth of the second counter drive gear 27 to the number of teeth of the sun gear S, that is, the gear ratio γ1 between the generator motor 16 and the drive motor 25.

In this case, the drive motor torque correction value δTM is calculated as follows. That is, the sun gear torque TS exerted on the sun gear S can be expressed by:

$$TS = TG + InG \cdot \alpha G$$

where InG is the inertia of the generator motor 16, and αG is the angular acceleration (rotation changing rate) of the generator motor 16. Since the angular acceleration αG is very small, it is possible to make an approximation in which the sun gear torque TS and the generator motor torque TG equal to each other:

$$TS = TG$$

Assuming that the number of teeth of the ring gear R is ρ times the number of teeth of the sun gear S, the ring gear torque TR is ρ times the sun gear torque TS.

$$TR = \rho \cdot TS \qquad = \rho \cdot TG$$

Thus, the generator motor torque TG can be calculated from the ring gear torque TR. Assuming that the counter gear ratio, that is, the ratio of the number of teeth of the second counter drive gear 27 to the number of teeth of the second counter driven gear 32 is i, the drive motor torque correction value δTM can be expressed as in:

$$\delta TM = \rho \bullet TS \bullet i$$

$$= \rho \bullet TG \bullet i$$

Since the gear ratio γ1 is written as:

$$\gamma1 = \rho \cdot i$$

the drive motor torque correction value δTM can be written as:

$$\delta TM = \gamma1 \cdot TG$$

Subsequently, a target drive motor torque setting processing means (not shown) of the vehicle control unit 51 performs a target drive motor torque setting process. That is, the means calculates a target drive motor torque TM* corresponding to the acceleration operation amount α and the vehicle speed V with reference to a target drive motor torque map (not shown), and sends the target drive motor torque TM* to the drive motor control unit 49.

After that, the engine control unit 46, the generator motor control unit 47 and the drive motor control unit 49 drive the engine 11, the generator motor 16 and the drive motor 25, respectively.

That is, the engine control unit 46 reads out a degree of throttle opening θ corresponding to the target engine revolution speed NE* with reference to a throttle opening degree map (not shown), and sends the degree of throttle opening θ to the engine 11 to drive the engine 11.

A current instruction value generation processing means of the generator motor control unit 47 performs a current instruction value generating process as follows. Upon receiving the target generator motor rotation speed NG* from the vehicle control unit 51, the means generates a current instruction value IG such that a deviation ΔNG between the generator motor rotation speed NG and the target generator motor rotation speed NG* becomes equal to "0", and sends the current instruction value IG to the generator motor 16 so as to correspondingly drive the generator motor 16. Thus, a rotation speed control of the generator motor 16 is performed.

A drive motor torque instruction value calculating means (not shown) of the drive motor control unit 49, upon receiving the target drive motor torque TM* and the drive motor torque correction value δTM from the vehicle control unit 51, subtracts the drive motor torque correction value δTM from the target drive motor torque TM* to determine a drive motor torque instruction value STM* as follows:

$$STM* = TM* - \delta TM$$

Subsequently, a current instruction value generation processing means (not shown) of the drive motor control unit 49 performs a current instruction value generating process. That is, the means generates a current instruction value IM such that a deviation ΔTM between the drive motor torque TM and the target drive motor torque TM* becomes equal to "0", and sends the current instruction value IM to the drive motor 25 so as to correspondingly drive the drive motor 25.

During the second vehicle start mode, a target generator motor torque setting processing means (not shown) of the vehicle control unit 51 performs a target generator motor torque setting process. That is, the means calculates a target generator motor torque TG* based on the target output torque TO*, and sends the target generator motor torque TG* to the generator motor control unit 47.

Subsequently, a generator motor torque instruction value calculation processing means (not shown) of the generator motor control unit 47 performs a generator motor torque instruction value calculating process. That is, upon receiving the target generator motor torque TG* from the vehicle control unit 51, the means calculates a generator motor torque instruction value STG* based on the target generator motor torque TG*.

During the second vehicle start mode, mainly the drive motor 25 is operated, and a shortfall of the drive force QM produced by the drive motor 25 is covered with the drive force QG produced by the generator motor 16 by utilizing the reaction force produced by the one-way clutch F. In this case, by driving the drive motor 25, the ring gear R is rotated in the forward direction, and furthermore, the carrier CR is slightly turned free in the forward direction. If the generator motor 16 is sharply driven, the sun gear S is sharply turned in the reverse direction, so that reverse rotation is transferred to the carrier CR. At this moment, the reverse rotation of the carrier CR is prevented by the one-way clutch F, so that revolution of the engine 11 is stopped. Therefore, the one-way clutch F receives a correspondingly great impact. As a result, the durability of the one-way clutch F reduces.

If a brake is disposed instead of the one-way clutch F, the brake similarly receives a great impact, so that the durability of the brake reduces.

Therefore, a generator motor torque rise tempering processing means (not shown) of the generator motor control unit 47 performs a generator motor torque rise tempering process to moderate the rise of the generator motor torque instruction value STG*.

In this case, the generator motor torque rise tempering processing means increases the changing rate ΔSTG* of the generator motor torque instruction value STG* with a constant gradient within a region A, and holds the changing rate ΔSTG* at a constant value within a region B, as indicated in FIG. 9. As a result, the generator motor torque instruction value STG*F after the tempering process gently rises in the region A, and increases with a constant gradient in the region B. Thus, the generator motor 16 is driven based on the post-tempering generator motor torque instruction value STG*F, so that the one-way clutch F will not receive great impact even if the generator motor 16 is sharply driven. As a result, it becomes possible to increase the service life of the one-way clutch F while preventing occurrence of unusual noises of the one-way clutch F.

Subsequently, the target drive motor torque setting processing means performs a target drive motor torque setting process. That is, the means calculates a target drive motor torque TM* corresponding to the acceleration operation amount α and the vehicle speed V with reference to the target drive motor torque map, and sends the target drive motor torque TM* to the drive motor control unit 49.

Furthermore, a drive motor torque instruction value calculation processing means performs a drive motor torque instruction value calculating process. That is, when a target drive motor torque TM* is received from the vehicle control unit 51, the means calculates the target drive motor torque TM* as a drive motor torque instruction value STM*. Then, a drive motor torque rise tempering processing means (not shown) of the drive motor control unit 49 performs a drive motor torque rise tempering process to moderate the rise of the drive motor torque instruction value STM*. Therefore, the drive motor 25 is driven based on the post-tempering drive motor torque instruction value STM*F, so that drive feel of the hybrid vehicle can be improved.

Subsequently, the generator motor control unit 47 and the drive motor control unit 49 drive the generator motor 16 and the drive motor 25, respectively.

During the second vehicle start mode, mainly the drive motor 25 is driven, and a shortfall of the drive force QM produced by the drive motor 25 is covered with the drive force QG produced by the generator motor 16. In this case, as the driver depresses the accelerator pedal 52, the target output torque TO* gradually increases. However, if the maximum changing rate of the drive motor torque TM is greater than or equal to the changing rate of the target output torque TO*, the driving of the generator motor 16 may be started when the drive motor torque TM reaches the drive motor outputtable torque TMa. Conversely, if the changing rate of the drive motor torque TM is less than the changing rate of the target output torque TO*, it is preferable to start the driving of the generator motor 16 at a timing of starting driving the drive motor 25.

A flowchart shown in FIG. 5 will be described.

> Step S1: A target output torque TO* is calculated.
> Step S2: It is determined whether the target output torque TO* is less than or equal to the drive motor outputtable torque TMa. If the target output torque TO* is less than or equal to the drive motor outputtable torque TMa, the process proceeds to step S3. If the target output torque TO* is greater than the drive motor outputtable torque TMa, the process proceeds to step S7.
> Step S3: The target engine operation state setting process is performed.
> Step S4: The target generator motor rotation speed setting process is performed.
> Step S5: The target drive motor torque setting process is performed.
> Step S6: The engine 11, the generator motor 16 and the drive motor 25 are driven. After that, the process ends.
> Step S7: A generator motor torque instruction value STG* is calculated.
> Step S8: The generator motor torque rise tempering process is performed.

Step S9: A drive motor torque instruction value STM* is calculated.

Step S10: The drive motor torque rise tempering process is performed.

Step S11: The engine 11, the generator motor 16 and the drive motor 25 are driven. After that, the process ends.

Next described will be drive patterns of the generator motor 16 and the drive motor 25.

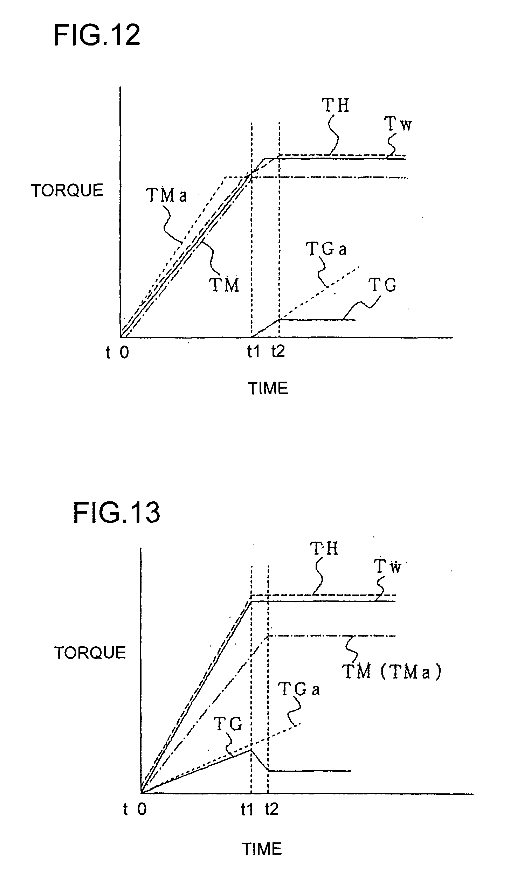

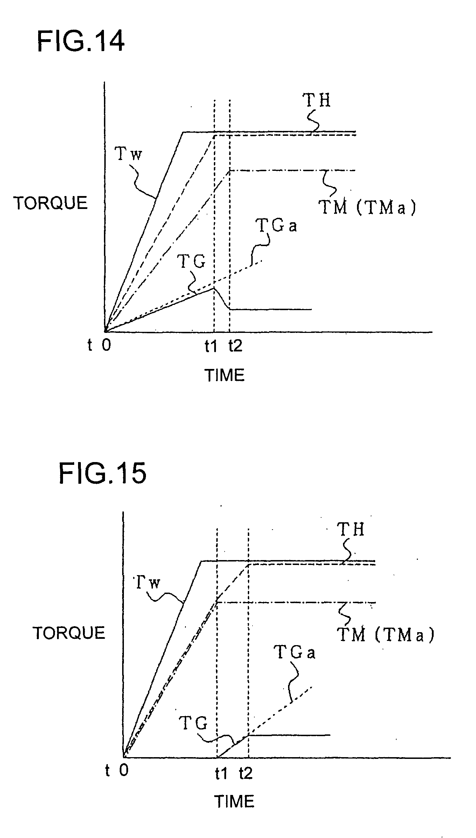

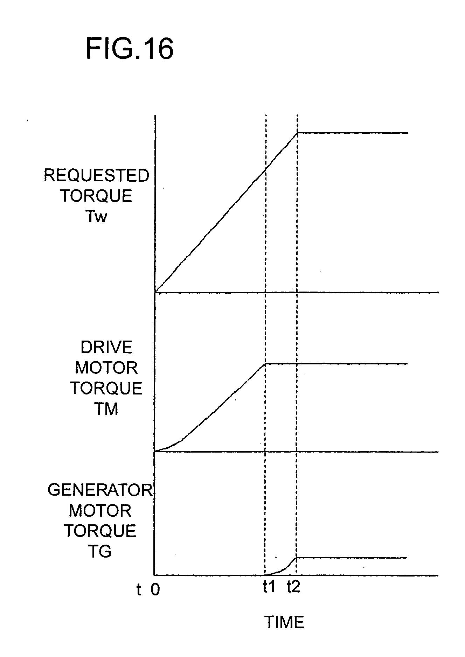

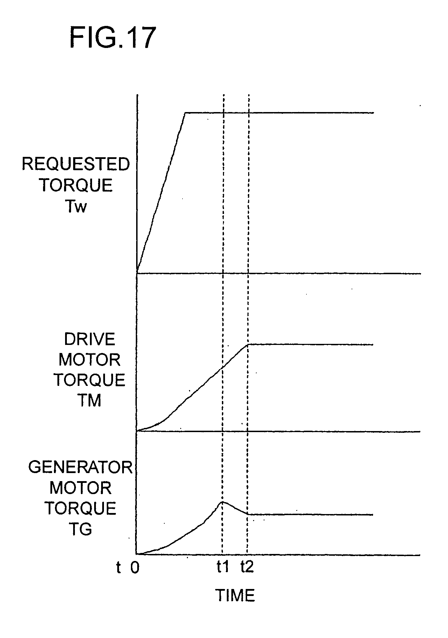

FIG. 11 is a time chart indicating a first drive pattern in accordance with the embodiment of the invention. FIG. 12 is a time chart indicating a second drive pattern in accordance with the embodiment of the invention. FIG. 13 is a time chart indicating a third drive pattern in accordance with the embodiment of the invention. FIG. 14 is a time chart indicating a fourth drive pattern in accordance with the embodiment of the invention. FIG. 15 is a time chart indicating a fifth drive pattern in accordance with the embodiment of the invention. FIG. 16 is a diagram indicating a state in which the generator motor torque rise tempering process is performed during the first drive pattern in accordance with the embodiment of the invention. FIG. 17 is a diagram indicating a state in which the generator motor torque rise tempering process is performed during the fourth drive pattern in accordance with the embodiment of the invention.

In these drawings, TG is the generator motor torque; TM is the drive motor torque; Tw is the requested torque; TH is the vehicle torque obtained by summing the generator motor torque TG and the drive motor torque TM; TMa is the drive motor outputtable torque representing the maximum drive motor torque TM that can be produced by the drive motor 25 (FIG. 4); and TGa is the generator motor outputtable torque as a torque changing rate limiting value that indicates the maximum generator motor torque TG that can be produced by the generator motor 16. The requested torque Tw changes corresponding to the acceleration operation amount $\alpha$.

The drive motor outputtable torque TMa is preset corresponding to the drive motor 25, and indicates a limiting value of the changing rate of the drive motor torque TM. In this case, the generator motor torque TG is generated in correspondence to a difference between the changing rate $\Delta$Tw of the requested torque Tw and the drive motor outputtable torque TMa. Therefore, the changing rate $\Delta$TH of the vehicle torque TH and the changing rate $\Delta$Tw of the requested torque Tw can be made equal to each other. Hence, the driving person will not feel an uncomfortable sensation when the hybrid vehicle is to be started.

In FIGS. 11 and 16, the maximum gradient of the generator motor outputtable torque TGa, that is, the changing rate $\Delta$TGa, and the maximum changing rate $\Delta$TMa of the drive motor outputtable torque TMa are greater than the changing rate $\Delta$Tw of the requested torque Tw.

Therefore, the drive motor torque instruction value calculation processing means calculates a drive motor torque instruction value STM*, and at a timing t0, starts to raise the drive motor torque TM at a changing rate $\Delta$TM corresponding to the changing rate $\Delta$Tw of the requested torque Tw. Then, at a timing t1 at which the drive motor torque TM reaches the drive motor outputtable torque TMa, the drive motor torque TM is set to a constant value.

Then, the generator motor torque instruction value calculation processing means calculates a generator motor torque instruction value STG*. At the timing t1, the means starts to raise the generator motor torque TG. The vehicle torque TH and the requested torque Tw are made equal. When the requested torque Tw reaches a constant value at the timing t2, the generator motor torque TG is set to a constant value. In order to equalize the vehicle torque TH and the requested torque Tw, a generator motor torque TG is produced corresponding to a difference between the requested torque Tw and the maximum drive motor torque TM.

In FIG. 12, the maximum of the changing rate $\Delta$TMa of the drive motor outputtable torque TMa is greater than the changing rate $\Delta$Tw of the requested torque Tw, and the changing rate $\Delta$Tw of the requested torque Tw is greater than the maximum changing rate $\Delta$TGa of the generator motor outputtable torque TGa.

Therefore, the drive motor torque instruction value calculation processing means calculates a drive motor torque instruction value STM*. At the timing t0, the means starts to raise the drive motor torque TM at a changing rate $\Delta$TM corresponding to the changing rate $\Delta$Tw of the requested torque Tw. At the timing t1 when the drive motor torque TM reaches the drive motor outputtable torque TMa, the means sets the drive motor torque TM to a constant value.

The generator motor torque instruction value calculation processing means calculates a generator motor torque instruction value STG*. At the timing t1, the means starts to raise the generator motor torque TG at the maximum changing rate $\Delta$TGa. At the timing t2 when the vehicle torque TH and the requested torque Tw become equal to each other, the means sets the generator motor torque TG to a constant value. In this case, in the range of the timing t1 to t2, the vehicle torque TH is less than the requested torque Tw, and does not reach a sufficient value.

In FIG. 13, the maximum changing rate $\Delta$TGa of the generator motor outputtable torque TGa and the maximum changing rate $\Delta$TMa of the drive motor outputtable torque TMa are less than the changing rate $\Delta$Tw of the requested torque Tw.

The drive motor torque instruction value calculation processing means calculates a drive motor torque instruction value STM*. The generator motor torque instruction value calculation processing means calculates a generator motor torque instruction value STG*. At the timing t0, the drive motor torque TM is raised at the maximum changing rate ΔTMa and the generator motor torque TG is raised so as to equalize the vehicle torque TH and the requested torque Tw. In order to equalize the vehicle torque TH and the requested torque Tw, the generator motor torque TG is produced in an amount corresponding to a difference between the requested torque Tw and the maximum drive motor torque TM. Subsequently at the timing t1 when the requested torque Tw reaches a constant value, the generator motor torque TG is reduced. At the timing t2 when the drive motor outputtable torque TMa reaches a constant value, the drive motor torque TM and the generator motor torque TG are set to constant values.

In FIGS. 14 and 17, the maximum changing rate ΔTGa of the generator motor outputtable torque TGa and the maximum changing rate ΔTMa of the drive motor outputtable torque TMa are respectively less than the changing rate ΔTw of the requested torque Tw.

The drive motor torque instruction value calculation processing means calculates a drive motor torque instruction value STM*. The generator motor torque instruction value calculation processing means calculates a generator motor torque instruction value STG*. At the timing t0, the drive motor torque TM and the generator motor torque TG are raised at the maximum changing rates ΔTMa and ΔTGa. At the timing t1 when the vehicle torque TH reaches the requested torque Tw, the generator motor torque TG is reduced. At the timing t2 when the drive motor outputtable torque TMa reaches a constant value, the drive motor torque TM and the generator motor torque TG are set to constant values. In this case, in the range of the timing t0 to t1, the vehicle torque TH is less than the requested torque Tw, and does not reach a sufficient value.

In FIG. 15, the maximum changing rate ΔTGa of the generator motor outputtable torque TGa and the maximum changing rate ΔTMa of the drive motor outputtable torque TMa are less than the changing rate ΔTw of the requested torque Tw.

The drive motor torque instruction value calculation processing means calculates a drive motor torque instruction value STM*, and the generator motor torque instruction value calculation processing means calculates a generator motor torque instruction value STG*. At the timing t0, the drive motor torque TM is raised at the maximum changing rate ΔTMa. At the timing t1 when the drive motor outputtable torque TMa reaches a constant value, the generator motor torque TG is raised at the maximum changing rate ΔTGa. At the timing t2 when the vehicle torque TH reaches the requested torque Tw, the generator motor torque TG is set to a constant value. In this case, in the range of timing t0 to t2, the vehicle torque TH is less than the requested torque Tw, and does not reach a sufficient value.

Although in this embodiment, the generator motor torque TG is produced in correspondence to a difference between the changing rate ΔTw of the requested torque Tw and the drive motor outputtable torque TMa, it is also possible to produce the drive motor torque TM at a changing rate ΔTM that allows maintenance of the maximum efficiency of the drive motor 25, and to produce the generator motor torque TG in correspondence to a difference between the requested torque Tw and the vehicle torque TH. In that case, the drive motor 25 and the generator motor 16 are driven at the same timing.

The invention is not limited to the above-described embodiment. Various modifications are possible based on the sprit of the invention, and are not excluded from the scope of the invention.

As described above in detail, according to the invention, a hybrid vehicle includes: an engine; a generator motor that receives at least a portion of an engine torque to generate electric power and to control the engine revolution speed; a drive motor; a drive wheel mechanically connected to the engine, the generator motor and the drive motor; stop means for stopping revolution of the engine; and generator motor control processing means for, when the hybrid vehicle is to be started, covering a shortfall of the drive force produced by the drive motor with the drive force produced by the generator motor by using a reaction force provided by the stop means.

The generator motor control processing means causes a generator motor torque to be produced corresponding to a difference between the changing rate of the requested torque and a limiting value of the changing rate of the drive motor torque pre-set for the drive motor.

In this case, the generator motor control processing means causes a generator motor torque to be produced corresponding to a difference between the changing rate of the requested torque and the limiting value of the changing rate of the drive motor torque pre-set for the drive motor.

Therefore, the changing rate of the vehicle torque obtained by adding the drive motor torque to the generator motor torque and the changing rate of the requested torque needed to start the hybrid vehicle can be made equal, so that a driver will not feel an uncomfortable sensation.

Another hybrid vehicle in accordance with the invention includes: a differential apparatus including a first gear element connected to the generator motor, a second gear element connected to the drive wheel, and a third gear element connected to the engine; and a one-way clutch disposed as the stop means between the third gear element and a casing.

In this case, the rise of the generator motor torque instruction value is moderated, so that even if the generator motor is sharply driven, the stop means does not receive great impact. As a result, it becomes possible to achieve high durability of the stop means while preventing occurrence of unusual noises from the stop means.

While the invention has been described with reference to what are presently considered to be preferred embodiments thereof, it is to be understood that the invention is not limited to the disclosed embodiments or constructions. To the contrary, the invention is intended to cover various modifications and equivalent arrangements.

FIG. 1

47: GENERATOR MOTOR CONTROL UNIT
16: GENERATOR MOTOR
F: ONE-WAY CLUTCH
11: ENGINE
25: DRIVE MOTOR
37: DRIVE WHEEL

FIG. 3

OUTPUT SHAFT 14
ENGINE 11
GENERATOR MOTOR 16
RING GEAR R
CARRIER CR
SUN GEAR S

FIG. 4

53: VEHICLE SPEED SENSOR
61: BRAKE PEDAL
52: ACCELERATOR PEDAL
51: VEHICLE CONTROL UNIT
46: ENGINE CONTROL UNIT
11: ENGINE
47: GENERATOR MOTOR CONTROL UNIT
16: GENERATOR MOTOR
49: DRIVE MOTOR CONTROL UNIT
25: DRIVE MOTOR
43: BATTERY
44: REMAINING BATTERY CHARGE DETECTOR DEVICE
72: BATTERY VOLTAGE SENSOR

FIG. 5

START
S1: CALCULATE TARGET OUTPUT TORQUE
S3: TARGET ENGINE OPERATION STATE SETTING PROCESS
S4: TARGET GENERATOR MOTOR ROTATION SPEED SETTING PROCESS
S5: TARGET DRIVE MOTOR TORQUE SETTING PROCESS
S6: DRIVE ENGINE, GENERATOR MOTOR, DRIVE MOTOR
S7: CALCULATE GENERATOR MOTOR TORQUE INSTRUCTION VALUE
S8: GENERATOR MOTOR TORQUE RISE TEMPERING PROCESS
S9: CALCULATE DRIVE MOTOR TORQUE INSTRUCTION VALUE
S10: DRIVE MOTOR TORQUE RISE TEMPERING PROCESS
S11: DRIVE GENERATOR MOTOR, DRIVE MOTOR
END

FIG. 6

VEHICLE DRIVE FORCE Q
VEHICLE SPEED V

FIG. 7

VEHICLE DRIVE FORCE Q
VEHICLE SPEED V

FIG. 8

ENGINE TORQUE TE
ENGINE REVOLUTION SPEED NE

FIG. 9

CHANGING RATE ∆STG*
TIME

FIG. 10

POST-TEMPERING GENERATOR MOTOR TORQUE INSTRUCTION VALUE
STG*F
TIME

FIG. 11

TORQUE
TIME

FIG. 12

TORQUE
TIME

FIG. 13

TORQUE
TIME

FIG. 14

TORQUE
TIME

FIG. 15

TORQUE
TIME

FIG. 16

REQUESTED TORQUE Tw
DRIVE MOTOR TORQUE TM
GENERATOR MOTOR TORQUE TG
TIME

FIG. 17

REQUESTED TORQUE Tw
DRIVE MOTOR TORQUE TM
GENERATOR MOTOR TORQUE TG
TIME

**Claims**

1. A hybrid vehicle comprising:

    a generator motor (16) that receives at least a portion of an engine torque (TE) to generate an electric power and to control an engine revolution speed (NE);
    a drive motor (25);
    a drive wheel (37) mechanically connected to the engine (11), the generator motor (16) and the drive motor (25);
    stop means (F) for stopping revolution of the engine (11); and
    generator motor control processing means (47) for, when the hybrid vehicle is to be started, covering a shortfall of a drive force produced by the drive motor (25) with a drive force produced by the generator motor (16) by using a reaction force provided by the stop means (F),

    wherein the generator motor control processing means (47) causes a generation of a generator motor torque (TG) in dependence on a difference between a changing rate of a requested torque (Tw) needed to run the hybrid vehicle and a limiting value of a changing rate of a drive motor torque (TM) pre-set for the drive motor (25).

2. The hybrid vehicle according to claim 1, further comprising a drive motor control processing means (49) causing a drive motor torque (TM) with a changing rate of the drive motor torque (TM) in dependence on a difference between the changing rate of a requested torque (Tw) and the limiting value of a changing rate of the drive motor torque (TM) pre-set for the drive motor (25).

3. The hybrid vehicle according to claim 1, wherein the generator motor control processing means (47) causes the generation of the generator motor torque (TG) in dependence on a difference between the changing rate of the requested torque (Tw) corresponding to a changing rate of an accelerator operation amount ($\alpha$) and a maximum changing rate of the drive motor (25).

4. The hybrid vehicle according to claim 3, wherein the generator motor control processing means (47) causes the generation of the generator motor torque (TG) at a timing at which the requested torque (Tw) becomes greater than the drive motor torque (TM).

5. The hybrid vehicle according to claim 2 and 3 or 4, wherein,
   if the changing rate of the requested torque (Tw) is less than the limiting value of the changing rate of the drive motor torque (TM), the drive motor control processing means (49) changes the drive motor torque (TM) at a changing rate corresponding to the changing rate of the requested torque (Tw), and wherein after the drive motor torque (TM) reaches a maximum torque, the generator motor control processing means (47) causes the generation of the generator motor torque (TG).

6. The hybrid vehicle according to claim 5, wherein, if the changing rate of the requested torque (Tw) is less than a maximum changing rate of the drive motor torque (TM), the generator motor control processing means (47) causes the generator motor (16) to generate a generator motor torque (TG) equal to a difference between the requested torque (Tw) and the maximum torque of the drive motor (25) when the requested torque (Tw) becomes greater than the maximum torque of the drive motor (25).

7. The hybrid vehicle according to claim 5, wherein if the changing rate of the requested torque (Tw) is greater than a maximum changing rate of the drive motor torque (TM), the generator motor control processing means (47) causes the generator motor torque (TG) to be generated at the maximum changing rate.

8. The hybrid vehicle according to claim 2 and 3 or 4, wherein,
   if the changing rate of the requested torque (Tw) is greater than the limiting value of the changing rate of the drive motor torque (TM), the drive motor control processing means (49) changes the drive motor torque (TM) at the limiting value of the changing rate preferably until the drive motor torque (TM) reaches a maximum torque, and the generator motor control processing means (47) causes the generation of the generator motor torque (TG) at a timing simultaneous with a timing of the drive motor torque (TM).

9. The hybrid vehicle according to claim 8, wherein if a changing rate of a difference between the requested torque (Tw) and the drive motor torque (TM) is less than the maximum changing rate of the generator motor torque (TG), the generator motor control processing means (47) causes the generator motor (16) to generate a generator motor torque (TG) equal to the difference between the requested torque (Tw) and the drive motor torque (TM).

10. The hybrid vehicle according to claim 8, wherein if a changing rate of a difference between the requested torque (Tw) and the drive motor torque (TM) is greater than the maximum changing rate of the generator motor torque (TG), the generator motor control processing means (47) changes the generator motor torque (TG) at the maximum changing rate.

11. The hybrid vehicle according to claim 2 and 3, wherein if the changing rate of the requested torque (Tw) is greater than the limiting value of the changing rate of the drive motor torque (TM), the drive motor control processing means (49) changes the drive motor torque (TM) at the limiting value of the changing rate, and wherein after the drive motor torque (TM) reaches a maximum torque, the generator motor control processing means (47) causes the generation of the generator motor torque (TG) to be produced.

12. The hybrid vehicle according to claim 3, wherein the generator motor control processing means (47) causes the generation of the generator motor torque (TG) in dependence on a difference between the changing rate of the requested torque (Tw) corresponding to the changing rate of the accelerator operation amount ($\alpha$) and a changing rate of the drive motor torque (TM) that maintains a maximum efficiency of the drive motor (25).

13. The hybrid vehicle according to claim 2 and 12, wherein the drive control processing means (49) changes the drive motor torque (TM) at the changing rate that maintains the maximum efficiency of the drive motor (25), and the generator control processing means (47) causes the generation of the generator motor torque (TG) at a timing simultaneous with a timing of the drive motor torque (TM).

14. The hybrid vehicle according to claim 13, wherein if a changing rate of a difference between the requested torque (Tw) and the drive motor torque (TM) is less than the maximum changing rate of the generator motor torque (TG), the generator motor control processing means (47) causes the generator motor (16) to produce a generator motor torque (TG) equal to the difference between the requested torque (Tw) and the drive motor torque (TM).

15. The hybrid vehicle according to claim 13, wherein if a changing rate of a difference between the requested torque (Tw) and the drive motor torque (TM) is greater than the maximum changing rate of the generator motor torque (TG), the generator motor control processing means (47) changes the generator motor torque (TG) at the maximum changing rate.

16. The hybrid vehicle according to any one of claims 1 to 15 comprising: a differential apparatus including a first gear element (S) connected to the generator motor (16), a second gear element (R) connected to the drive wheel (37), and a third gear element (P) connected to the engine (11); and a one-way clutch disposed as the stop means (F) between the third gear element (P) and a casing (10).

17. The hybrid vehicle according to claim 16, wherein the generator motor control processing means (47) comprises generator motor torque rise tempering processing means for moderating a rise of a generator motor torque instruction value (IG).

FIG. 1

FIG. 2

FIG. 3

OUTPUT SHAFT　1 4　○　RING GEAR

1

ENGINE　1 1　○　CARRIER

$\rho$

GENERATOR
MOTOR　1 6　○　SUN GEAR

# FIG. 4

# FIG. 5

START

CALCULATE TARGET OUTPUT TORQUE — S 1

TO* ≦ TMa — S 2

Y →

**TARGET ENGINE OPERATION STATE SETTING PROCESS** — S 3

**TARGET GENERATOR MOTOR ROTATION SPEED SETTING PROCESS** — S 4

**TARGET DRIVE MOTOR TORQUE SETTING PROCESS** — S 5

**DRIVE ENGINE, GENERATOR MOTOR, DRIVE MOTOR** — S 6

**CALCULATE GENERATOR MOTOR TORQUE INSTRUCTION VALUE** — S 7

**GENERATOR MOTOR TORQUE RISE TEMPERING PROCESS** — S 8

**CALCULATE DRIVE MOTOR TORQUE INSTUCTION VALUE** — S 9

**DRIVE MOTOR TORQUE RISE TEMPERING PROCESS** — S 10

**DRIVE GENERATOR, DRIVE MOTOR** — S 11

END

17

## FIG.6

[N]

VEHICLE
DRIVE
FORCE
Q

$\alpha$=100[%]

0

$\alpha$=0[%]

0        VEHICLE SPEED  V        [km/h]

## FIG.7

[N]        ß=0[%]

VEHICLE
DRIVE
FORCE
Q

ß=100[%]

0        VEHICLE SPEED  V        [km/h]

FIG.8

ENGINE
TORQUE

T E

ENGINE REVOLUTION SPEED

FIG.9

CHANGING
RATE

ΔSTG*

A          B

TIME

## FIG.10

## FIG.11

## FIG.12

## FIG.13

## FIG.14

TORQUE

Tw

TH

TM (TMa)

TGa

TG

t 0    t1  t2

TIME

## FIG.15

TORQUE

Tw

TH

TM (TMa)

TGa

TG

t 0    t1 t2

TIME

# FIG.16

REQUESTED
TORQUE
Tw

DRIVE
MOTOR
TORQUE
TM

GENERATOR
MOTOR
TORQUE
TG

t 0          t1  t2

TIME

# FIG.17

REQUESTED
TORQUE
Tw

DRIVE
MOTOR
TORQUE
TM

GENERATOR
MOTOR
TORQUE
TG

t 0        t1  t2

TIME